# EUROPÄISCHE PATENTSCHRIFT

(11) **EP 1 044 940 B1**
(45) Veröffentlichungstag und Bekanntmachung des Hinweises auf die Patenterteilung: **15.10.2003**
(21) Anmeldenummer: 99125726.2
(22) Anmeldetag: 23.12.1999
(51) Int. Cl.: C04B 28/04

(54) **Leichtmörtel**
Lightweight mortar
Mortier léger

(30) Priorität: 13.03.1999 DE 19911307
(43) Veröffentlichungstag der Anmeldung: 18.10.2000
(73) Patentinhaber: Liapor GmbH & Co. KG, 91352 Hallerndorf (DE); SAKRET Trockenbaustoffe Sachsen GmbH & Co. KG, 09236 Diethensdorf (DE)
(72) Erfinder: Thienel, Karl-Christian, Dr., 91301 Forchheim (DE); Heerwagen, Otfried, 07330 Arnsbach bei Probstzella (DE); Helbig, Petra, 09122 Chemnitz (DE); Pfitzke, Ute, 09236 Diethensdorf (DE)
(74) Vertreter: Böhme, Volker, Dipl.-Ing.

(56) Entgegenhaltungen:
- EP-A- 0 572 933
- EP-A- 0 839 774
- EP-A- 0 985 646
- EP-A- 0 990 628

## Beschreibung

Die Erfindung betrifft einen Leichtmörtel, enthaltend Zement als einzigem Bindemittel, Blähton-Granulat, Blähglas-Granulat als Rundkorn mit abgestuftem Kornaufbau, Celluloseester und Vinylacetat-Polymer. Das Blähton-Granulat wird auch Schaumglas-Granulat genannt. Das Vinylacetat-Polymer ist nur in so geringen Mengen enthalten, daß seine Wirkung als organisches Bindemittel vernachlässigbar ist. Mit W/mK ist hier stets Watt/(Meter x Grad Kelvin) gemeint.

Ein bekannter (EP 0 839 774 A1) Leichtmörtel dieser Art ist ein Leichtmauermörtel der Klasse LM 21, dessen Wärmeleitfähigkeit maximal 0,18 W/mK ist. Dieser Leichtmörtel ist zur Verwendung als Normalbettmörtel (Auftragsschichtdicke > 6 mm) oder als Mittelbettmörtel (Auftragsschichtdicke 5 - 6 mm) vorgesehen. Es ist das Blähton-Granulat als Rundkorn mit geschlossenporiger stabiler Hülle vorgesehen. Für die Teilchengröße ist ein Bereich von 0,2 - 4 mm angegeben. Für das Blähton-Granulat und das Blähglas-Granulat ist eine minimale Teilchengröße von 0,5 mm angegeben. Ein Dünnbettmörtel wird mit einer Auftragsschichtdicke von 1 - 2 mm verarbeitet und weist eine maximale Teilchengröße von 1 mm auf. Der bekannte Leichtmörtel läßt sich als Dünnbettmörtel nicht verwenden, weil Dünnbett aus dem bekannten Leichtmörtel kein ausreichendes Wasserrückhaltevermögen aufweist.

Der Rechenwert der Wärmeleitfähigkeit eines durch die Praxis bekannten Dünnbettmörtels beträgt λ_{R} = 1,0 W/mK. Durch den Dünnbettmörtel wird der Anteil der Fuge an der Gesamtfläche einer Wand von 4,8 %, Normalbett, auf 0,8 % reduziert. Dennoch wirkt die hohe Leitfähigkeit des Dünnbettmörtels im Vergleich zum Steinmaterial wie eine Kältebrücke. Dies führt trotz hochwärmedämmender Mauersteine dazu, daß für den gleichen Mauerstein die Wärmeleitfähigkeit der vermauerten Wand beim Einsatz des bekannten Dünnbettmörtels gegenüber einer Ausführung mit LM 21 schlechter wird. Es ist auch ein Zement und Leichtzuschlag enthaltender Dünnbettmörtel bekannt (DE 42 18 143 C1, DE 44 43 907 A1), bei dem der Leichtzuschlag unter mechanischer Krafteinwirkung zerstörbar, z.B. Perlite, ist. Mit diesem Dünnbettmörtel ist es schwierig, eine Fuge bzw. ein Bett mit einer vorbestimmten Dicke zu erzeugen.

Als hochwärmedämmende Mauersteine werden hier solche bezeichnet, die einen Rechenwert der Wärmeleitfähigkeit λ_{R} ≤ 0,21 W/(mK) aufweisen und dadurch bei einer Wandstärke von 36,5 cm in monolithischer Ausführung die Bauteilanforderung der Wärmeschutzverordnung '95 erfüllen. Dieser Wert der Wärmeleitfähigkeit gilt immer für eine feste Kombination aus Mauerstein und Mörtel (LM 21, LM 36, Normal- oder normaler Dünnbettmörtel).

Eine Aufgabe der Erfindung ist es nun, einen leichten Dünnbettmörtel mit relativ hohem Wärmedämmvermögen bzw. einer gegenüber λ_{R} = 1 verminderten Wärmeleitfähigkeit zu schaffen, durch dessen Einsatz die Wärmeleitfähigkeit der vermauerten Wand nicht gegenüber einer Ausführung mit dem bekannten Leichtmauermörtel der Klasse LM 21 verschlechtert ist. Die Erfindung besteht, diese Aufgabe lösend, in einem Leichtmörtel der eingangs genannten Art, der dadurch gekennzeichnet ist, daß er zur Verwendung als Dünnbettmörtel vorgesehen ist wobei die Teilchengröße maximal 1 mm ist, daß das Blähton-Granulat gebrochen ist und mit 40 - 70 M.% (des Blähton-Granulats) < 0,25 mm ist und daß das Blähglas-Granulat mit 85 - 95 M.% (des Blähglas-Granulats) 0,5 - 1 mm und mit 5 - 15 M.% (des Blähglas-Granulats) 0,25 - 0,5 mm ist.

Der erfindungsgemäße Leichtmörtel ist ein Dünnbettmörtel und besitzt als ausgehärtetes Dünnbett (Auftragsschichtdicke 1 - 2 mm) eine Wärmeleitfähigkeit, die beachtlich kleiner als 1 W/mK, in der Regel < 0,5 W/mK ist. Bei einer aus hochwärmedämmenden Mauersteinen vermauerten Wand ist die Wärmeleitfähigkeit der Wand mit dem erfindungsgemäßen Dünnbett-Leichtmörtel nicht größer als mit dem bekannten Normalbett-Leichtmauermörtel der Klasse LM 21. Wegen des Feinanteils (< 0,25 mm) des Blähtongranulats und des Feinanteils (0,25 - 0,5 mm) des Blähglas-Granulats läßt sich beim Vermauern der Mauerstein auf dem Dünnbett ausreichend leicht und lange in seiner Lage korrigieren. Da das Blähton-Granulat gebrochen ist, weist der erfindungsgemäße Leichtmörtel ein ausreichendes Wasserrückhaltevermögen auf. Die Teilchengröße von maximal 1 mm bringt zwar schlechtere Wärmedämmeigenschaften, was aber in Kauf genommen wird. Bei dem erfindungsgemäßen Leichtmörtel ist auf Kalkhydrat als weiterem Bindemittel verzichtet, da Kalkhydrat die Festigkeit des ausgehärteten Dünnbettmörtels beeinträchtigen würde. Von einem Dünnbettmörtel wird die doppelte Festigkeit verlangt, die von einem Normalbettmörtel verlangt wird. Da der Leichtzuschlag von Blähton und Blähglas gebildet ist, die im Rahmen der vorliegenden Erfindung nicht durch mechanische Krafteinwirkung zerstört werden, läßt sich mit dem erfindungsgemäßen Dünnbettmörtel eine Fuge bzw. ein Bett mit einer vorbestimmten Dicke vereinfacht erzeugen.

Bei dem erfindungsgemäßen Leichtmörtel ist die Wärmeleitfähigkeit in der Regel > 0,18 W/mK, z.B. > 0,19 W/mK. Dies steht der Erfüllung der weiter oben angegebenen Aufgabe nicht entgegen. Durch die Kombination des rundkörnigen Blähglas-Granulats mit dem gebrochenen Blähton-Granulat wird bei der Verarbeitung ein Kugellagereffekt des aufgetragenen, noch unausgehärteten Dünnbettmörtels vermieden.

Besonders zweckmäßig und vorteilhaft ist es, wenn der Leichtmörtel enthält Zement mit 30 - 89 M.%, Blähton-Granulat mit 5 - 40 M.%, Blähglas-Granulat mit 5 - 40 M.%, Celluloseester mit 0,01 - 1,0 M.% und Vinylacetat-Polymer mit 0,01 - 1,0 M.%. In diesen Bestandteil-Bereichen läßt sich der erfindungsgemäße leichte Dünnbettmörtel brauchbar verwirklichen.

Besonders zweckmäßig und vorteilhaft ist es dabei, wenn der Leichtmörtel enthält Zement mit 50 - 70 M.%, Blähton-Granulat mit 10 - 25 M.%, Blähglas-Granulat mit 5 - 30 M.%, Celluloseester mit 0,01 - 1,0 M.% und Vinylacetat-Polymer mit 0,01 - 1,0 M.%. In diesen Bestandteil-Bereichen läßt sich der erfindungsgemäße leichte Dünnbettmörtel verbessert verwirklichen.

Bei dem erfindungsgemäßen Leichtmörtel ist mit Blähton stets auch Blähschiefer gemeint. Der Leichtmörtel enthält z.B. auch 0,001 - 1,0 M.% Luftporenbildner, wobei, falls erforderlich, der maximale Zementanteil verringert ist. In dem erfindungsgemäßen Leichtmörtel ist Quarzsand nicht vorgesehen. Der erfindungsgemäße Leichtmörtel kann zusätzlich kleine Anteile von Perlite und Vermiculite enthalten, wobei falls erforderlich, die maximalen Anteile von Blähton und/oder Blähglas vermindert sind.

Eine Ausführungsform des erfindungsgemäßen wärmedämmenden Dünnbettmörtels weist folgende Zusammensetzung auf:
hydraulisch erhärtendes Bindemittel in Form von Zement mit 59 M.%,
Leichtzuschlagstoff in Form von Blähglas-Granulat (0,5 - 1 mm) mit 12 M.%,
Leichtzuschlagstoff in Form von Blähglas-Granulat (0,25 - 0,5 mm) mit 1 M.%,
Leichtzuschlagstoff in Form von Blähton-Granulat mit 18,2 M.%,
Celluloseester mit 0,035 M.%,
Vinylacetat-Polymer mit 0,5 M.% und
Luftporenbildner mit 0,265 M.%.

Es gibt einen Stein Liapor Super-K, verzahnt, Rohdichteklasse 0,6. Mauerwerk, das aus diesem Stein unter Verwendung von Normalbettmörtel der Klasse LM 21 erstellt wird, hat einen Rechenwert der Wärmeleitzahl von 0,14 W/mK. In der Dünnbettausführung mit normalem Dünnbettmörtel (Wärmeleitzahl 1 W/mK) verschlechtert sich die Wärmeleitzahl auf 0,16 W/mK. Durch den Einsatz des erfindungsgemäßen leichten Dünnbettmörtels mit einer Wärmeleitzahl von 0,28 W/mK bleibt für das Mauerwerk die günstigere Wärmeleitzahl von 0,14 W/mK auch in der Dünnbettausführung erhalten.

## Patentansprüche

1. Leichtmörtel, enthaltend Zement als einzigem Bindemittel, Blähton-Granulat, Blähglas-Granulat als Rundkorn, mit abgestuftem Kornaufbau, Celluloseester und Vinylacetat-Polymer,
**dadurch gekennzeichnet,**
**daß** es zur Verwendung als Dünnbettmörtel vorgesehen ist, wobei die Teilchengröße maximal 1 mm ist,
**daß** das Blähton-Granulat gebrochen ist und mit 40 - 70 M.% (des Blähton-Granulats) < 0,25 mm ist und
**daß** das Blähglas-Granulat mit 85 - 95 M.% (des Blähglas-Granulats) 0,5 - 1 mm und mit 5 - 15 M.% (des Blähglas-Granulats) 0,25 - 0,5 mm ist.

2. Leichtmörtel nach Anspruch 1, **dadurch gekennzeichnet, daß** die Wärmeleitfähigkeit > 0,18 W/mK, z.B. > 0,19 W/mK ist.

3. Leichtmörtel nach Anspruch 1 oder 2, **dadurch gekennzeichnet, daß** er enthält
Zement mit 30 - 89 M.%,
Blähton-Granulat mit 5 - 40 M.%,
Blähglas-Granulat mit 5 - 40 M.%,
Celluloseester mit 0,01 - 1,0 M.% und
' Vinylacetat-Polymer mit 0,01 - 1,0 M.%.

4. Leichtmörtel nach Anspruch 3, **dadurch gekennzeichnet, daß** er enthält
Zement mit 50 - 70 M.%,
Blähton-Granulat mit 10 - 25 M.%,
Blähglas-Granulat mit 5 - 30 M.%,
Celluloseester mit 0,01 - 1,0 M.% und
Vinylacetat-Polymer mit 0,01 - 1,0 M.%.

## Claims

1. A lightweight mortar, containing cement as sole binder, expanded-clay granulate, expanded-glass granulate as round-grained material with a graded grain composition, cellulose ester and vinyl acetate polymer, **characterised in that** it is provided for use as a thin-bed mortar, the maximum particle size being 1 mm, **in that** the expanded-clay granulate is broken and 40-70 m.% of the expanded-clay granulate is < 0.25 mm, and **in that** 85-95 m.% of the expanded-glass granulate is 0.5-1 mm and 5-15 m. % of the expanded-glass granulate is 0.25-0.5 mm.

2. A lightweight mortar according to claim 1, **characterised in that** the thermal conductivity is > 0.18 W/mK, e.g. > 0.19 W/mK.

3. A lightweight mortar according to claim 1 or 2, **characterised in that** it contains
30-89 m.% cement
5-40 m.% expanded-clay granulate
5-40 m.% expanded-glass granulate
0.01-1.0 m.% cellulose ester and
0.01 to 1.0 m.% vinyl acetate polymer.

4. A lightweight mortar according to claim 3, **characterised in that** it contains
50-70 m.% cement
10-25 m.% expanded-clay granulate
5-30 m.% expanded-glass granulate
0.01-1.0 m.% cellulose ester and
0.01 to 1.0 m.% vinyl acetate polymer.

## Revendications

1. Mortier léger, contenant du ciment en tant que seul liant, un granulé d'argile expansé, un granulé de verre expansé sous la forme de grains ronds avec une structure échelonnée des grains, un ester de cellulose et un polymère d'acétate de vinyle,
**caractérisé en ce qu'**il est prévu pour une utilisation en tant que mortier en lit mince et la grandeur des particules est au maximum dé 1 mm,
**en ce que** le granulé d'argile expansé est cassé et a 40 - 70% en moles (du granulé d'argile expansé) < 0,25 mm et
**en ce que** le granulé de verre expansé a 85 - 95% en moles (du granulé de verre expansé) à 0,5 - 1 mm et 5 - 15% en moles (du granulé de verre expansé) à 0,25 - 0,5 mm.

2. Mortier léger selon la revendication 1, **caractérisé en ce que** la conductibilité thermique > 0,18 W/mK, par exemple > 0,19 W/mK.

3. Mortier léger selon la revendication 1 ou 2,
**caractérisé en ce qu'**il contient
Ciment à 30 - 89% en moles,
Granulé d'argile expansé à 5 - 40% en moles,
Granulé de verre expansé à 5 - 40% en moles,
Ester de cellulose à 0,01 - 1,0% en moles, et
Polymère d'acétate de vinyle à 0,01 - 1,0% en moles.

4. Mortier léger selon la revendication 3, **caractérisé en ce qu'**il contient
Ciment à 50 - 70% en moles,
Granulé d'argile expansé à 10 - 25% en moles,
Granulé de verre expansé à 5 - 30% en moles,
Ester de cellulose à 0,01 - 1,0% en moles, et
Polymère d'acétate de vinyle à 0,01 - 1,0% en moles.
